(19) Europäisches Patentamt
European Patent Office
Office européen des brevets

(11) **EP 1 766 209 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(21) Anmeldenummer: **05754315.9**

(22) Anmeldetag: **24.06.2005**

(51) Int Cl.:
*F02B 37/24* (2006.01)    *F02D 9/06* (2006.01)

(86) Internationale Anmeldenummer:
**PCT/EP2005/006834**

(87) Internationale Veröffentlichungsnummer:
**WO 2006/007936 (26.01.2006 Gazette 2006/04)**

(54) **BRENNKRAFTMASCHINE MIT EINEM ABGASTURBOLADER**

INTERNAL COMBUSTION ENGINE COMPRISING AN EXHAUST GAS TURBOCHARGER

MOTEUR A COMBUSTION INTERNE POURVU D'UNE TURBOSOUFFLANTE A GAZ D'ECHAPPEMENT

(84) Benannte Vertragsstaaten:
**DE FR GB IT**

(30) Priorität: **15.07.2004 DE 102004034070**

(43) Veröffentlichungstag der Anmeldung:
**28.03.2007 Patentblatt 2007/13**

(73) Patentinhaber: **Daimler AG**
**70327 Stuttgart (DE)**

(72) Erfinder:
• **KÜSPERT, Alfred**
**73760 Ostfildern (DE)**
• **SCHMID, Wolfram**
**72622 Nürtingen (DE)**
• **SUMSER, Siegfried**
**70327 Stuttgart (DE)**

(74) Vertreter: **JENSEN & SON**
**366-368 Old Street**
**London EC1V 9LT (GB)**

(56) Entgegenhaltungen:
**EP-A- 0 991 856      DE-A1- 10 152 804**
**DE-A1- 19 853 360**

## Beschreibung

Die Erfindung betrifft eine Brennkraftmaschine mit einem Abgasturbolader nach dem Oberbegriff des Anspruchs 1.

Aus der gattungsbildenden Druckschrift DE 101 52 804 A1 ist eine Brennkraftmaschine bekannt, deren Abgasturbolader eine zweiflutige Turbine mit einem asymmetrischen Turbinengehäuse aufweist. Die beiden Fluten der Turbine sind derart dimensioniert, dass der Schadstoffausstoß und der Kraftstoffverbrauch der Brennkraftmaschine reduziert sind, wodurch die Brennkraftmaschine ein gutes Abgasverhalten aufweist.

Voraussetzung für das gute Abgasverhalten der Brennkraftmaschine ist eine unterschiedliche Dimensionierung der beiden Fluten, so dass die Turbine eine Flut mit einer größeren effektiven Ringdüse und damit einem größeren Strömungsquerschnitt und eine Flut mit einer kleineren effektiven Ringdüse und damit einem kleineren Strömungsquerschnitt aufweist.

Aufgrund der unterschiedlichen Dimensionierung der Fluten der Turbine kann der Abgasturbolader zu einem Motorbremsbetrieb der Brennkraftmaschine herangezogen werden, derart, dass bei einem Einsatz des Abgasturboladers als Motorbremse die Flut mit der kleineren effektiven Ringdüse zum Aufstauen der Luft eingesetzt wird.

Der Erfindung liegt das Problem zugrunde, eine gattungsgemäße Brennkraftmaschine mit Abgasturbolader so zu gestalten, dass die für den Motorbremsbetrieb angestrebten hohen Bremsleistungen in geeigneter Zuordnung zu den für den Fahrbetrieb wesentlichen Drehzahlen des Motors bei relativ niedrigen thermischen Belastungen erreicht wird.

Dieses Problem wird erfindungsgemäß mit den Merkmalen des Anspruchs 1 gelöst.

Die Erfindung basiert auf dem Gedanken, geometrische Maße der Brennkraftmaschine und des Abgasturboladers in ein bestimmtes Verhältnis zueinander zu setzen, um die maximale Bremsleistung im Motorbremsbetrieb unter optimaler Dimensionierung von Brennkraftmaschine und Abgasturbolader erzielen zu können.

In vorteilhafter Weise lassen sich Bremsleistungen, die bisher im Betrieb der Brennkraftmaschine mit einer üblichen Bremsklappe erreichbar sind, mit der Turbine mit asymmetrischem Gehäuse und erfindungsgemäßer Dimensionierung nahezu verdoppeln.

Es werden ein Eintrittsdurchmesser eines Turbinenrades $D_T$, ein Gesamthubvolumen $V_H$ der Brennkraftmaschine, welches gebildet wird aus einem Differenzvolumen von maximalem Hubvolumen und minimalem Hubvolumen der Brennkraftmaschine, ein kleinster Strömungsquerschnitt $A_{D,klein}$ und ein variabler Öffnungsquerschnitt $dA_{Ab,max}$ derart in Beziehung zueinander gesetzt, dass sich für ein asymmetrisches Turbinengehäuse ein Turbolader-Brems-Faktor $TBF_{Asym}$ entsprechend der Beziehung

$$TBF_{Asym} = \left( A_{D,klein} + dA_{Ab,max} \right) \cdot \frac{D_T}{V_H}$$

ergibt. Der Turbolader-Brems-Faktor $TBF_{Asym}$ ist erfindungsgemäß kleiner 0,005 und liegt bevorzugt zwischen 0,001 und 0,003.

In einer vorteilhaften Ausgestaltung nach Anspruch 3 liegt der Turbolader-Brems-Faktor $TBF_{Asym}$ bevorzugt bei 0,002.

In einer vorteilhaften Ausgestaltung nach Anspruch 4 ist bezogen auf den Auslegungspunkt der maximalen Bremsleistung im Rahmen der Erfindung der kleinste Strömungsquerschnitt $A_{D,klein}$ ein kleinster Ringdüsenquerschnitt, wobei ein Halsquerschnitt $A_1$ größer ist als der kleinste Ringdüsenquerschnitt $A_{D,1}$. Der kleinste effektive Ringdüsenquerschnitt stellt hier den kleinsten Strömungsquerschnitt auf das Turbinenrad dar und ist dadurch für den maximalen Aufstaudruck vor dem Turbinenrad und damit für die maximale Bremsleistung relevant.

In einer weiteren Ausgestaltung nach Anspruch 5 ist der bei maximaler Bremsleistung vorgegebene kleinste Strömungsquerschnitt $A_{D,klein}$ der Halsquerschnitt $A_1$, wobei der Halsquerschnitt $A_1$ kleiner ist als der kleinste Ringdüsenquerschnitt $A_{D,1}$. Der Halsquerschnitt $A_1$ stellt hier den kleinsten Strömungsquerschnitt auf das Turbinenrad dar und ist dadurch für den maximalen Aufstaudruck vor dem Turbinenrad und damit für die maximale Bremsleistung relevant.

In einer weiteren vorteilhaften Ausgestaltung nach Anspruch 6 ist eine Verhältniszahl des maximalen variablen Öffnungsquerschnitts $d_{Ab,max}$ zum kleinsten Strömungsquerschnitt $A_{D,klein}$ bei maximaler Bremsleistung im Rahmen der Erfindung größer 0,2 und liegt bevorzugt im Bereich zwischen 0,2 und 1. Bei kleiner Verhältniszahl ist die Bremsleistung im unteren Drehzahlbereich verhältnismäßig klein und wächst im oberen Drehzahlbereich verhältnismäßig stark an. Bei großer Verhältniszahl ergibt sich eine höhere Bremsleistung schon im unteren Drehzahlbereich mit einem, im Vergleich zu kleineren Verhältniszahlen, flacheren Anstieg der Bremsleistung gegen den Punkt maximaler Bremsleistung als Auslegungspunkt.

In weiterer vorteilhafter Ausgestaltung nach Anspruch 7 ist der maximale variable Öffnungsquerschnitt $dA_{Ab,max}$

der Ventileinrichtung bei maximaler Bremsleistung der obere Grenzwert, den der variable Öffnungsquerschnitt $dA_{Ab}$ der Ventileinrichtung annehmen kann, da eine weitere Vergrößerung des Öffnungsquerschnittes keinen strömungsrelevanten Vorteil mit sich führt.

In weiterer bevorzugter Ausgestaltung nach Anspruch 8 ist der Wert des maximalen variablen Öffnungsquerschnitts $dA_{Ab,max}$ der Ventileinrichtung auf höchstens den gleichen Wert eines größten Ringdüsenquerschnitts zu begrenzen, da die größte Flut des asymmetrischen Turbinengehäuses für das Umblasen relevant ist und der engste Querschnitt der größten Flut der größte Ringdüsenquerschnitt ist.

In weiterer vorteilhafter Ausgestaltung nach Anspruch 9 ist der variable Öffnungsquerschnitt $dA_{Ab}$ der Ventileinrichtung drehzahlabhängig veränderbar, da die umzublasende Abgasmenge abhängig von der Motordrehzahl ist.

In weiterer vorteilhafter Ausgestaltung nach Anspruch 10 nimmt mit sinkender Drehzahl der variable Öffnungsquerschnitt $dA_{Ab}$ der Ventileinrichtung ab, da die umzublasende Abgasmenge mit sinkender Drehzahl in ihrem Wert abnimmt beziehungsweise mit steigender Drehzahl in ihrem Wert zunimmt.

In weiterer vorteilhafter Ausgestaltung nach Anspruch 11 ist der Bereich des teilweise oder vollständig offenen Öffnungsquerschnitts der Ventileinrichtung bezogen auf das Drehzahlband des Motors einem oberen Bereich des Drehzahlbandes des Motors zugeordnet, das mindestens bis zu der Drehzahl bei maximaler Bremsleistung reicht, um eine maximale Bremsleistung durch die maximal mögliche umzublasende Abgasmenge zu erzielen.

In weiterer vorteilhafter Ausgestaltung nach Anspruch 12 liegt die maximale Bremsleistung bei einer Drehzahl, die größer ist als die Nenndrehzahl der Brennkraftmaschine.

In weiterer vorteilhafter Ausgestaltung nach Anspruch 13 beginnt zweckmäßigerweise der Drehzahlbereich, in dem der Öffnungsquerschnitt der Ventileinrichtung freigegeben wird, bei etwa 2/3 bis 3/4 der bei maximaler Bremsleistung gegebenen Drehzahl.

In weiterer vorteilhafter Ausgestaltung nach Anspruch 14 liegt die Drehzahl, die bei maximaler Bremsleistung gegeben ist, in einem Bereich, der etwa 1/4 bis 1/3 größer ist als die Nenndrehzahl der Brennkraftmaschine.

In weiterer vorteilhafter Ausgestaltung nach Anspruch 15 stehen die Fluten der Turbine der Brennkraftmaschine entsprechend einem Asymmetriefaktor $F_{Asym}$ zueinander in Beziehung, der aus einem Verhältnis von Turbinendurchsatzparametern gebildet ist, wobei die Turbinendurchsatzparameter im Bereich einer Stopfgrenze der Turbine aus einem Abgasmassenstrom, einer Abgastemperatur und einem Abgasdruck, jeweils gemessen in der betreffenden Flut, zu bestimmen sind. Dieser Asymmetriefaktor darf erfindungsgemäß nur maximal so groß werden wie der Kehrwert des Hubvolumens der Brennkraftmaschine, potenziert mit dem Wert 0,15.

In einer bevorzugten Ausführung nach Anspruch 16 ist die Ventileinrichtung als Drehschieber ausgebildet.

In einer weiteren vorteilhaften Ausführung nach Anspruch 17 weist die Ventileinrichtung sowohl eine Umblaseöffnung als auch eine Abblaseöffnung auf, damit ein Umblasen von Abgas von einer Flut in eine andere Flut und ein Abblasen von Abgas an der Turbine vorbei mit einer Einrichtung durchführbar ist. Ebenso ist mit dieser Ausführung ein gleichzeitiges Umblasen und Abblasen von Abgas möglich, um Abgasturboladerdrehzahlen zu begrenzen.

In einer weiteren vorteilhaften Ausführung nach Anspruch 18 ist die Abblaseöffnung als flacher Schlitz ausgebildet.

In einer weiteren vorteilhaften Ausführung nach Anspruch 19 stellt die Ventileinrichtung eine Abblaseeinrichtung dar, die eine Abblaseöffnung aufweist, da bei sehr hohen Bremsleistungen, z.B. Turboader-Brems-Faktoren die kleiner sind als 0,003, eine Begrenzung einer Abgasturboladerdrehzahl notwendig ist. Eine Abblaseeinrichtung, die Abgas an der Turbine vorbei führt, stellt eine einfache Lösung bezüglich der Begrenzung der Abgasturboladerdrehzahl dar.

In einer weiteren vorteilhaften Ausführung nach Anspruch 20 stellt die Ventileinrichtung eine Umblaseeinrichtung dar. Damit kann von einer größeren Flut Abgas in eine kleinere Flut umgeblasen werden, so dass das Abgas in der kleineren Flut auf einen höheren Druck komprimiert wird. Bei bestimmten Auslegungen und Betriebspunkten sind auch Umblaserichtungen von der kleineren Flut in die größere Flut denkbar. Das Turbinenrad wird von dem Abgas mit erhöhtem Druck beaufschlagt. Dies führt zu einer Erhöhung der Abgasturboladerdrehzahl und damit zu einer Erhöhung der von einem Verdichter des Abgasturboladers geförderten Luftmenge. Die Steigerung der geförderten Luftmenge führt zu einer Erhöhung der Motorbremsleistung.

Weitere Vorteile und zweckmäßige Ausführungen der Erfindung sind den Ansprüchen, der Figurenbeschreibung und den Zeichnungen zu entnehmen.

Dabei zeigen:

Fig. 1     eine schematische Darstellung einer erfindungsgemäßen Brennkraftmaschine mit einem Abgasturbolader,

Fig. 2     einen Längsschnitt durch eine Turbine des Abgasturboladers mit zwei Fluten,

Fig. 3     einen Querschnitt durch die Turbine mit zwei Fluten und einer Ventileinrichtung entsprechend Fig. 2 in einer Ventilstellung bei der die Durchströmung der beide Fluten erfolgt,

Fig. 4    einen weiteren Querschnitt durch die Ventileinrichtung entsprechend Fig. 3,

Fig. 5    einen Querschnitt durch die Turbine mit zwei Fluten und durch die Ventileinrichtung entsprechend Fig. 2 in einer geöffneten Ventilstellung, bei der eine Umblasung von Abgas von der größeren Flut in die kleinere Flut erfolgt,

Fig. 6    einen weiteren Querschnitt durch die Ventileinrichtung entsprechend Fig. 5,

Fig. 7    einen Querschnitt durch die Turbine mit zwei Fluten und durch die Ventileinrichtung der Turbine entsprechend Fig. 2 in einer Ventilstellung bei der eine Abblasung von Abgas in einen Auspuffkanal erfolgt,

Fig. 8    einen weiteren Querschnitt durch die Ventileinrichtung entsprechend Fig. 7 und

Fig. 9    ein schematisiertes Diagramm, in dem der grundsätzliche Verlauf der Bremsleistung P über der Motordrehzahl n bei unterschiedlichen Verhältnissen von variablem Strömungsquerschnitt und bei maximaler Bremsleistung zusätzlich freigegebenem Strömungsquerschnitt dargestellt ist.

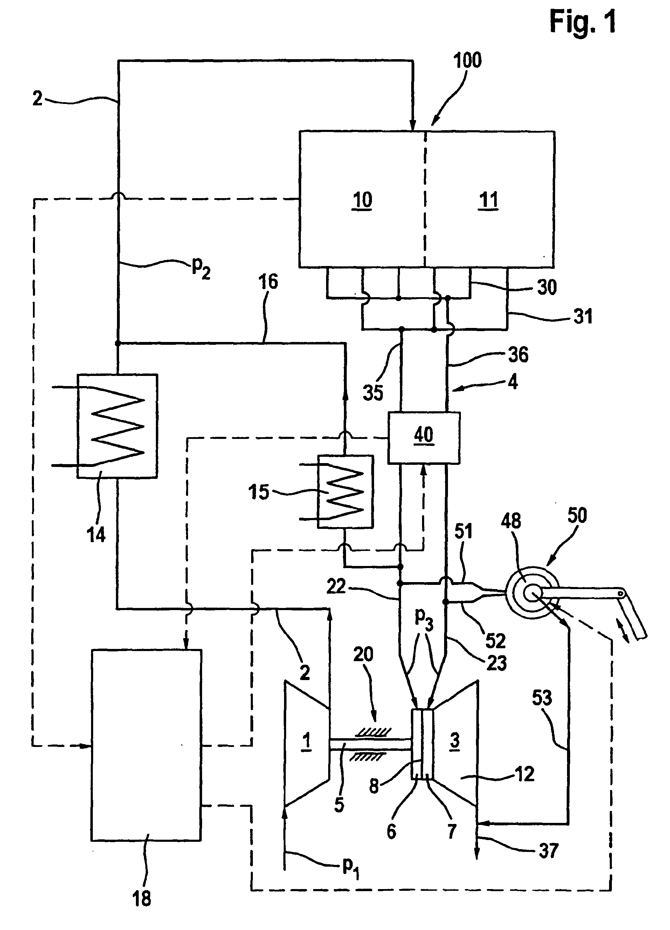

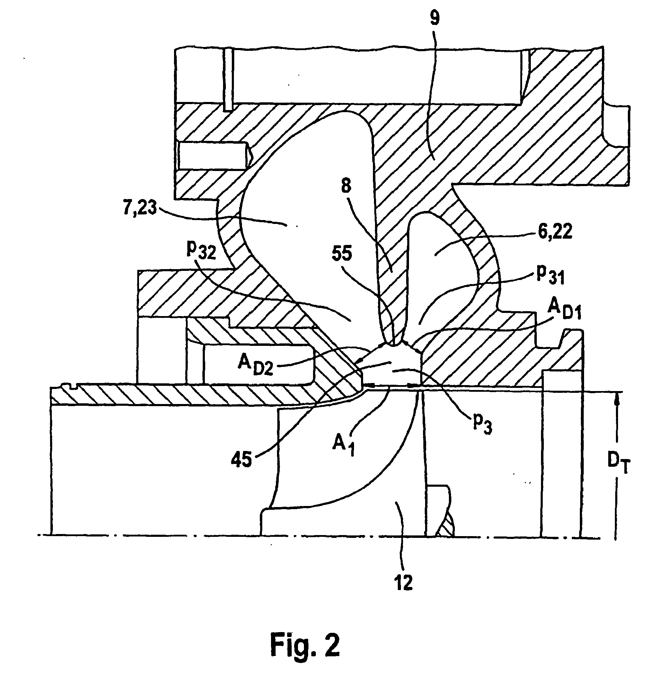

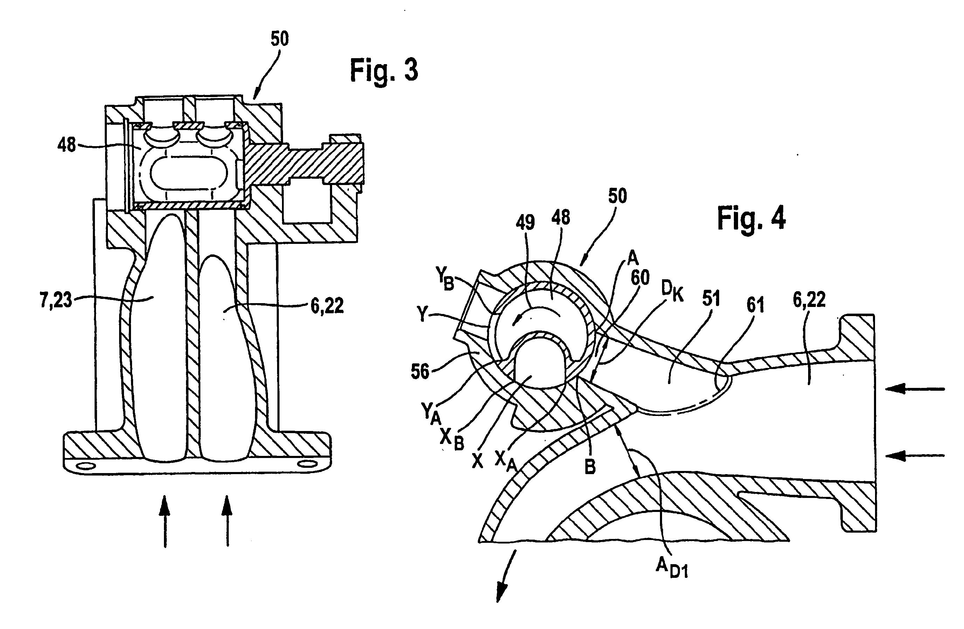

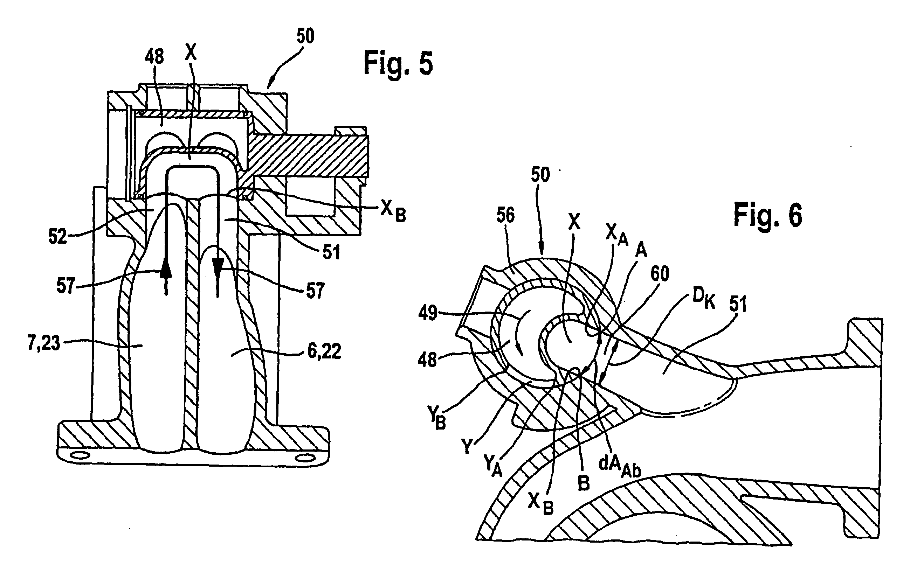

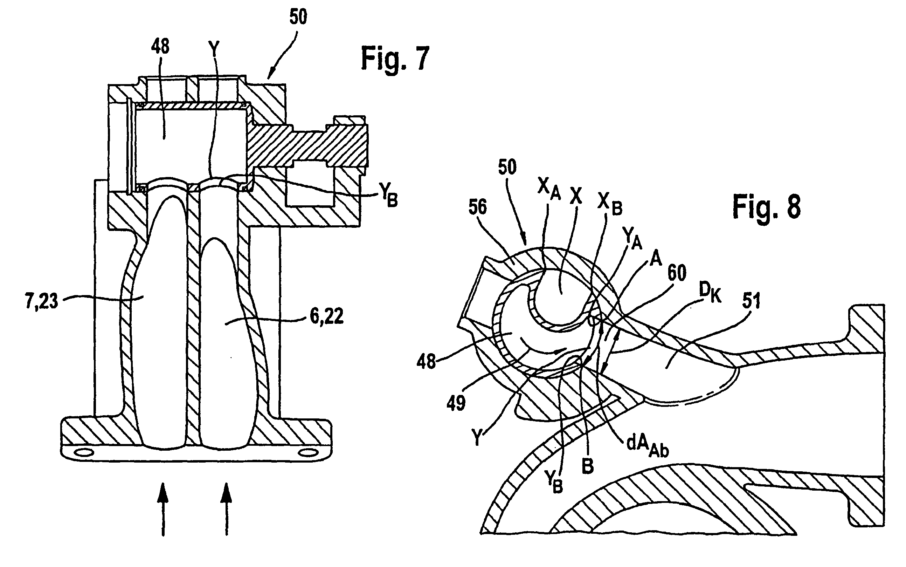

In Fig. 1 ist eine erfindungsgemäße Brennkraftmaschine 100 mit einem Abgasturbolader 20 dargestellt. Die Brennkraftmaschine 100 ist beispielsweise ein Dieselmotor für ein Kraftfahrzeug, sie kann ebenso ein Ottomotor für ein Kraftfahrzeug sein. Der Brennkraftmaschine 100 ist der Abgasturbolader 20 mit einem Verdichter 1 in einem Ansaugtrakt 2 der Brennkraftmaschine 100 und einer Turbine 3 in einem Abgasstrang 4 der Brennkraftmaschine 100 zugeordnet. Die Turbine 3 ist beispielsweise eine Turbine mit Festgeometrie, sie kann ebenso eine Turbine mit variabler Turbinengeometrie (VTG) sein. Der Verdichter 1 wird über eine Welle 5 von der Turbine 3 angetrieben, so dass der Verdichter 2 Frischluft mit einem Druck $p_1$ ansaugt und auf einen Ladedruck $p_2$ verdichtet. Der Verdichter 1 ist mit einer Festgeometrie ausgestattet, er kann ebenso ein Verdichter mit variabler Verdichtergeometrie sein.
Die Turbine 3 mit einem Turbinenrad 12 ist als eine asymmetrische zweiflutige Turbine ausgebildet und weist in einem in Fig. 2 näher dargestellten Turbinengehäuse 9 zwei verschieden große Fluten 6 und 7 beziehungsweise zwei verschieden große Spiralkanäle 22 und 23 auf. Die beiden Fluten 6 und 7 beziehungsweise die Spiralkanäle 22 und 23 sind durch eine gehäusefeste Flutentrennwand 8 im Turbinengehäuse 9 voneinander getrennt. Der Turbine 3 ist stromab eine Auspuffleitung 37 zugeordnet. Die erste Flut 6 ist als kleine Flut und die zweite Flut 7 ist als große Flut ausgebildet.
Die Brennkraftmaschine 100 weist beispielsweise zwei separate Zylinderbänke 10, 11 auf, wobei jeder Zylinderbank 10, 11 je ein Abgaskrümmer 30, 31 zugeordnet ist. Über die Abgaskrümmer 30, 31 wird Abgas der betreffenden Zylinderbank 10, 11 in getrennten Abgasleitungen 35, 36 geführt. Der Abgasleitung 35 beziehungsweise 36 ist der Spiralkanal 22 beziehungsweise 23 zugeordnet.
Dem Spiralkanal 22 der ersten Flut 6 ist eine Abgasrückführleitung 16 zugeordnet, wobei die Abgasrückführleitung 16 einen Abgasrückführkühler 15 aufweist, in dem das zurückgeführte Abgas von einer hohen Abgastemperatur auf eine niedrigere Temperatur kühlbar ist. Die Abgasrückführleitung 16 verbindet die Abgasleitung 22 mit dem Ansaugtrakt 2 und mündet stromab eines dem Verdichter 1 nachgeschalteten Ladeluftkühlers 14 in den Ansaugtrakt 2. In strömungsgünstiger Art und Weise ist die Abgasrückführleitung 16 generell der kleineren Flut 6 der beiden Fluten 6, 7 zu zuordnen.
Den Spiralkanälen 22 und 23 ist eine einstellbare Ventileinrichtung 50 mit einem Schieber 48 zugeordnet, die vorzugsweise als Drehschieber ausgebildet ist. Die Ventileinrichtung 50 weist einen ersten Kanal 51 und einen zweiten Kanal 52 auf. Der erste Kanal 51 mündet in den Spiralkanal 22 der ersten Flut 6 und der zweite Kanal 52 mündet in den Spiralkanal 23 der zweiten Flut 7. Des Weiteren weist die Ventileinrichtung 50 einen dritten Kanal 53 auf, der stromab der Turbine in den Auspuffkanal 37 mündet.
Die Ventileinrichtung 50 kann drei Hauptstellungen einnehmen. In einer ersten Hauptstellung gemäß Fig. 4, im Normalbetrieb der Brennkraftmaschine 100, sind die Kanäle 51 und 52 geschlossen. Das Abgas strömt durch die Spiralkanäle 22, 23 und die Fluten 6, 7 ungestört zum Turbinenrad 12. In einer zweiten Hauptstellung gemäß Fig. 6 erfolgt im Motorbremsbetrieb der Brennkraftmaschine 100 ein Umblasen des Abgases von der größeren Flut 7 in die kleinere Flut 6. Durch das Umblasen wird die Abgasturboladerdrehzahl beziehungsweise die Fördermenge des Verdichters 1 kontrolliert. Ein Anstieg der Fördermenge des Verdichters 1 führt zu einer Steigerung der Bremsleistung im Motorbremsbetrieb. In einer dritten Hauptstellung gemäß Fig.8 kann im Motorbremsbetrieb ein Abblasen des Abgases um die Turbine herum erfolgen, um schädigendes Überschreiten der Abgasturboladerdrehzahl zu vermeiden. In den drei Hauptstellungen ist es grundsätzlich möglich durch die Verdrehung des Schiebers 48 die Abgasmenge an umgeblasenem oder abgeblasenem Abgas von einem Maximalwert auf Null oder von Null auf einen Maximalwert zu steuern. Neben diesen drei Hauptstellungen ist auch eine Zwischenstellung möglich. So kann durch weiteres Verdrehen des Schiebers 48 in einer Pfeilrichtung 49 in Fig. 6 neben dem Umblasen auch das Abblasen des Abgases ermöglicht werden. Auch kann durch weiteres Verdrehen des Schiebers 48 entgegen der Pfeilrichtung 49 in Fig. 8 neben dem Abblasen auch das Umblasen des Abgases ermöglicht werden. Das Abblasen der Abgases erfolgt durch den dritten Kanal 53. Ohne diesen dritten Kanal 53 könnte bei Motoren mit größerem Hubraum eine Überdrehung des Abgasturboladers 20 bei hohen Motorbremsleistungen auftreten und damit zu Schäden am Abgasturbolader 20 führen. Auch bei sehr hohen Bremsleistungen im Motorbremsbetrieb ist der Wechsel von der Umblasung zur Abblasung notwendig, da auch hier ein Überdrehen des Abgasturboladers 20 auftreten kann. Mittels der Abblasung, die einer geregelten Wirkungsgradverschlechterung entspricht, lässt sich eine Überdrehung des Abgasturboladers 20 zuverlässig vermeiden.

Stromab der Abgasleitungen 35, 36 und stromauf der Spiralkanäle 22, 23 der Turbine 3 ist der Brennkraftmaschine 100 eine Schaltvorrichtung 40 zugeordnet, mit der eine Beaufschlagung der Spiralkanäle 22, 23 steuerbar ist. Die Schaltvorrichtung 40 ist stromauf der Ventileinrichtung 50 vorgesehen. Bei der Schaltvorrichtung 40 handelt es sich insbesondere um ein Schaltventil das in einer Grundstellung die Kanäle 35 und 22 sowie die Kanäle 36 und 23 verbindet. In einer Schaltstellung der Schaltvorrichtung 40 sind die Kanäle 35 und 36 ausschließlich mit dem Kanal 22 verbunden. Der Kanal 23 ist gesperrt. Durch entsprechende Schaltung der Schaltvorrichtung 40 kann zwischen einer Stossaufladung oder einer Stauaufladung gewählt werden, wobei in üblicher Antriebsweise der Brennkraftmaschine 100 die Stoßaufladung vorherrschend ist. Wird der Betrieb der Brennkraftmaschine 100 auf Stauaufladung umgestellt, so befindet sich die Schaltvorrichtung 40 in ihrer Schaltstellung und es wird vorzugsweise die kleinere der beiden Fluten 6, 7 von allen Zylindern der Bänke 10, 11 beaufschlagt. Dabei ist die Schaltvorrichtung 40 derart geschalten, dass ausschließlich die kleinere erste Flut 6 der beiden Fluten 6, 7 vom Abgas der Brennkraftmaschine 100 durchströmt wird. Die größere zweite Flut 7 der beiden Fluten 6, 7 wird vom Abgas der Brennkraftmaschine 100 nicht durchströmt.

Die Schaltvorrichtung 40 ist elektromagnetisch betätigbar und steht mit einer Regel- und Steuereinheit 18 der Brennkraftmaschine 100 elektrisch in Verbindung. Ebenfalls stehen über vorgesehene Sensoren die Zylinderbänke 10 und 11 elektrisch mit der Regel- und Steuereinheit 18 in Verbindung, so dass thermodynamische Kenngrößen der Brennkraftmaschine 100 der Regel- und Steuereinheit 18 zuführbar sind. In Abhängigkeit dieser Kenngrößen erfolgt die Regelung der Schaltvorrichtung 40. Die Ventileinrichtung 50 ist insbesondere elektromagnetisch ausgebildet und steht ebenfalls mit der Steuereinheit 18 elektrisch in Verbindung, damit eine Regelung der Ventileinrichtung 50 ebenfalls in Abhängigkeit der thermodynamischen Kenngrößen der Brennkraftmaschine 100 über die Regel- und Steuereinheit 18 durchführbar ist.

In Fig. 2 ist ein Längsschnitt durch die Turbine 3 mit den Fluten 6, 7 beziehungsweise den Spiralkanälen 22, 23 der Brennkraftmaschine 100 näher dargestellt. Das Turbinengehäuse 9 weist die beiden Fluten 6, 7 beziehungsweise die Spiralkanäle 22, 23 auf. Die Flutentrennwand 8 des Turbinengehäuses 9 trennt die Fluten 6, 7 beziehungsweise die Spiralkanäle 22, 23. Die Fluten 6, 7 werden in einem Übergangsbereich 45 stromab eines Endes 55 der Flutentrennwand 8 zusammengeführt. Im Übergangsbereich 45 vermischen sich die Abgase beider Fluten 6, 7, die dann auf das Turbinenrad 12 der Turbine 3 auftreffen. Der Übergangsbereich 45 weist am Turbinenrad 12 einen Halsquerschnitt $A_1$ auf, der einen freien Strömungsquerschnitt $A_D$ auf das Turbinenrad 12 mit einem Durchmesser $D_T$ darstellt.

Grundsätzlich gilt es für den Motorbremsbetrieb der Brennkraftmaschine 100 das Abgas aufzustauen, welches das Turbinenrad 12 beaufschlagt. Damit wird eine möglichst hohe Drehzahl der Turbine 3 und dadurch eine hohe Fördermenge des Verdichters 1 erzielt. Je größer nun ein Aufstaudruck $p_3$ vor dem Turbinenrad 12 ist, desto höher ist die Fördermenge des Verdichters 1 und desto größer ist die Leistung der Brennkraftmaschine 100 im Motorbremsbetrieb. Im Gegensatz zum Fahrbetrieb der Brennkraftmaschine 100, für den Gleiches gilt, wird im Bremsbetrieb der Brennkraftmaschine 100 in den Zylindern der Zylinderbänke 10, 11 zu einem bestimmten Grad Kurbelwinkel, in der Regel in der Nähe eines oberen Totpunktes, eine Drossel oder ein Ventil geöffnet, so dass das Abgas aus dem Zylinder entweichen kann und keinen Expansionsdruck auf einen Kolben im Zylinder ausübt.

Grundsätzlich gilt für ein Aufstauen des Abgases, dass ein Aufstaudruck $p_3$ vor dem Turbinenrad 12 umso größer ist, je kleiner ein freier Strömungsquerschnitt $A_D$ auf das Turbinenrad 12 ist. Für den Aufstaudruck $p_3$ vor dem Turbinenrad 12 ist ein im Übergangsbereich 45 kleinster freier Strömungsquerschnitt $A_{D,klein}$ wirksam, da an diesem kleinsten freien Strömungsquerschnitt $A_{D,klein}$ der größte Aufstaudruck $p_3$ erzeugt wird.

Da üblicherweise die kleinere Flut 6 der beiden Fluten 6, 7 auch einen kleineren Ringdüsenquerschnitt $A_{D1}$ als die größere Flut 7 der beiden Fluten 6, 7 aufweist, wird das Aufstauen des Abgases bei der Turbine 3 derart erreicht, dass das Abgas von der größeren Flut 7 mit einem üblicherweise größeren Ringdüsenquerschnitt $A_{D2}$ der beiden Fluten 6, 7 in die kleinere der beiden Fluten 6, 7 mit Hilfe der Ventileinrichtung 50 strömt. Damit ist für die maximale Bremsleistung nur noch relevant, ob der kleinste freie Strömungsquerschnitt $A_{D,klein}$ von dem Ringdüsenquerschnitt $A_{D1}$ der kleineren Flut 6 der beiden Fluten 6, 7 oder von dem Halsquerschnitt $A_1$ gebildet wird. Ist der Ringdüsenquerschnitt $A_{D1}$ kleiner als der Halsquerschnitt $A_1$, so ist der Ringdüsenquerschnitt $A_{D1}$ für die maximale Bremsleistung relevant. Ist der Halsquerschnitt $A_1$ kleiner als der Ringdüsenquerschnitt $A_{D1}$, so ist der Halsquerschnitt $A_1$ für die maximale Bremsleistung relevant.

Wie in Fig. 2 dargestellt, weist die erste Flut 6 den kleineren Strömungsquerschnitt $A_{D1}$ auf. Die zweite Flut 7 weist den größeren Strömungsquerschnitt $A_{D2}$ auf. Dementsprechend kann die Flut 6 als die kleinere Flut beziehungsweise die Flut 7 als die größere Flut bezeichnet werden.

Zur Aufteilung des Größenverhältnisses zwischen der kleinen Flut 6 und der großen Flut 7 kann ein Asymmetriefaktor $F_{Asym}$ in Abhängigkeit eines Gesamthubvolumens $V_H$ der Brennkraftmaschine 100 gemäß einer Beziehung

$$F_{Asym} = \frac{\phi_{31,S}}{\phi_{32,S}}$$

bestimmt werden, der der Beziehung

$$F_{Asym} \leq \left(\frac{1}{V_H}\right)^{0,15}$$

folgt. Das Gesamthubvolumen $V_H$ der Brennkraftmaschine 100 wird aus der Differenz des maximalen und des minimalen Hubvolumens der Zylinder gebildet. $\phi_{31,S}$ entspricht dabei einem Turbinendurchsatzparameter durch die kleine Flut 6 im Bereich einer Stopfgrenze S der Turbine 3 und $\phi_{32,S}$ entspricht einem Turbinendurchsatzparameter durch die große Flut 7 im Bereich der Stopfgrenze S der Turbine 3. Die Turbinendurchsatzparameter $\phi_{31,S}$ und $\phi_{32,S}$ können entsprechend den Gleichungen der Turbinendurchsatzparameters $\phi_{32,S}$ und $\phi_{32,S}$ in Abhängigkeit der Abgasmassenströme $\dot{m}_{31,S}$ und $\dot{m}_{32,S}$ durch die Fluten 6 beziehungsweise 7, der Abgastemperaturen $T_{31,S}$ und $T_{32,S}$ des Abgases in den Fluten 6 beziehungsweise 7 und der Abgasdrücke $p_{31,S}$ und $p_{32,S}$ des Abgases in den Fluten 6 beziehungsweise 7 nach

$$\phi_{31,S} = \dot{m}_{31,S}\sqrt{T_{31,S}} \cdot \frac{1}{p_{31,S}}$$

$$\phi_{32,S} = \dot{m}_{32,S}\sqrt{T_{32,S}} \cdot \frac{1}{p_{32,S}}$$

berechnet werden. Ein Gesamt-Turbinendurchsatzparameter $\phi_{ges,S}$ ergibt sich aus der Addition des Turbinendurchsatzparameters $\phi_{31,S}$ und des Turbinendurchsatzparameters $\phi_{32,S}$ und kann empirisch oder analytisch aus dem Gesamthubvolumen $V_H$ der Brennkraftmaschine 100 ermittelt werden. Damit ist eine genaue Dimensionierung und Festlegung der Fluten 6, 7 möglich.

In Fig. 3 ist ein Querschnitt durch die Fluten 6, 7 und die Ventileinrichtung 50 der Turbine entsprechend Fig. 2 dargestellt. Die Ventileinrichtung 50 befindet sich in geschlossenem Zustand, in dem kein Abgas von der Flut 7 in die Flut 6 oder von der Flut 6 in die Flut 7 strömen kann. Dies entspricht dem Normalbetrieb der Brennkraftmaschine 100 ohne Einsatz des Abgasturboladers 20 als Motorbremse.

In Fig. 4 ist ein weiterer Querschnitt der Ventileinrichtung 50 und des Kanals 51 der ersten Flut 6 entsprechend Fig. 3 dargestellt. Der Kanal 51 zweigt von der ersten Flut 6 an einer Abzweigung 61 im Turbinengehäuse 9 ab. Die Abzweigung 61 liegt stromauf des Turbinenrades 12 beispielsweise unweit des Ringdüsenquerschnitts $A_{D1}$. An ein Kanalende 60 des Kanals 51 mit einem Kanaldurchmesser $D_K$ schließt die Ventileinrichtung 50 mit einem Ventileinrichtungsgehäuse 56 an. Das Ventileinrichtungsgehäuse 56 kann wie dargestellt Teil des Turbinengehäuses 9 sein. Es ist auch möglich das Ventileinrichtungsgehäuse 56 als separates Gehäuse auszubilden.

Die Ventileinrichtung 50 ist als Drehschieber ausgebildet, der den Schieber 48 aufweist. Der Schieber 48 ist drehbar im Ventileinrichtungsgehäuse 56 untergebracht. Der Schieber 48 weist an seinem Umfang sowohl eine Umblaseöffnung X mit einer Öffnungsberandung beziehungsweise Öffnungskante $X_A$ und einer Schließberandung beziehungsweise Schließkante $X_B$ als auch eine Abblaseöffnung Y mit einer Öffnungsberandung beziehungsweise Öffnungskante $Y_A$ und einer Schließberandung beziehungsweise Schließkante $Y_B$ auf. Über die Umblaseöffnung X wird aus dem hier nicht näher dargestellten Kanal 52 der hier nicht näher dargestellten zweiten Flut 7 Abgas in den Kanal 51 der ersten Flut 6 umgeblasen. Über die Abblaseöffnung Y wird Abgas aus der ersten Flut 6 über den Kanal 51 in den hier nicht näher dargestellten dritten Kanal 53 zur Umgehung der Turbine 3 geleitet. In der dargestellten Position des Schiebers 48 ist der Kanal 51 geschlossen, da weder die Umblaseöffnung X noch die Abblaseöffnung Y über dem Kanalende 60 liegen beziehungsweise mit dem Kanalende 60 in Deckung gebracht sind.

Das Kanalende 60 weist zwei markante Stellen B und A auf, die sobald sie von einer der Kanten $X_A$, $X_B$ der Umblaseöffnung X oder von einer der Kanten $Y_A$, $Y_B$ der Umblaseöffnung Y überschritten werden, den Kanal 51 beginnen freizugeben oder zu schließen.

Wird der Schieber 48 in seiner Stellung gemäß Fig. 4 zum Beispiel in Pfeilrichtung 49 gedreht, so erreicht die Öffnungskante $X_A$ der Umblaseöffnung X die erste markante Stelle B des Kanals 51 und gibt bei weiterer Drehung in Pfeilrichtung 49 ein Teil des Kanals 51 frei, wodurch ein hier nicht näher dargestellter variabler Öffnungsquerschnitt $dA_{Ab}$ gebildet wird, durch den Abgas aus dem Kanal 51 in die Ventileinrichtung 50 strömen kann. In der dargestellten Position des Schiebers 48 ist der Wert des variablen Öffnungsquerschnitts $dA_{Ab}$ noch Null.

In Fig. 5 ist ein Querschnitt durch die Fluten 6, 7 und die Ventileinrichtung 50 der Turbine entsprechend Fig. 2 dargestellt. Die Ventileinrichtung 50 befindet sich in geöffnetem Zustand, in dem das Abgas von der Flut 7 in die Flut 6 oder von der Flut 6 in die Flut 7 strömen kann. Der Schieber 48 befindet sich in seiner Umblasestellung. Entsprechend der in Fig. 5 eingezeichneten Pfeile 57 gelangt das Abgas von der größeren Flut 7 in die kleinere Flut 6.

In Fig. 6 ist ein weiterer Querschnitt der Ventileinrichtung 50 und des Kanals 51 entsprechend Fig. 5 dargestellt. Die Öffnungskante $X_A$ der Umblaseöffnung X hat die zweite markante Stelle A des Kanalendes 60 erreicht, beziehungsweise die Schließkante $X_B$ hat die erste markante Stelle B des Kanalendes 60 erreicht, so dass die Umblaseöffnung X vollständig den Durchmesser $D_K$ des Kanals 51 freigibt. Der variable Öffnungsquerschnitt $dA_{Ab}$ stellt in dieser Position der Ventileinrichtung 50 einen maximalen variablen Öffnungsquerschnitt $dA_{Ab,max}$ des Schiebers 48 der Ventileinrichtung 50 dar. Das Abgas gelangt aus dem Kanal 52 über die Umblaseöffnung X in den Kanal 51.

Bei einer weiteren Drehung der Ventileinrichtung 50 in Pfeilrichtung 49 wandert die Öffnungskante $X_A$ der Umblaseöffnung X in Pfeilrichtung 49 über die zweite markante Stelle A des Kanalendes 60 und verkleinert damit den variablen Öffnungsquerschnitt $dA_{Ab}$ der Umblaseöffnung X solange, bis die Öffnungskante $Y_A$ der Abblaseöffnung Y die erste markante Stelle B des Kanalendes 60 überschreitet. Der variable Öffnungsquerschnitt $dA_{Ab}$ gibt dann sowohl die Umblaseöffnung X als auch die Abblaseöffnung Y je teilweise frei, derart, dass Abgas in dieser Zwischenstellung sowohl um- als auch abgeblasen wird.

In Fig. 7 ist ein Querschnitt durch die Fluten 6, 7 und die Ventileinrichtung 50 der Turbine 3 entsprechend Fig. 2 dargestellt. Die Ventileinrichtung 50 befindet sich in einer Stellung, in der eine Abblasung erfolgt, derart, dass kein Abgas von der größeren Flut 7 in die kleinere Flut 6 oder umgekehrt strömen kann. Das Abgas strömt über die Abblaseöffnung Y in den dritten Kanal 53 (siehe Fig. 1) stromab der Turbine 3 weiter in den Auspuffkanal 37.

In Fig. 8 ist ein weiterer Querschnitt der Ventileinrichtung 50 und des Kanals 51 entsprechend Fig. 7 dargestellt. Die Öffnungskante $Y_A$ der Abblaseöffnung Y hat die zweite markante Stelle A des Kanalendes 60 erreicht, beziehungsweise die Schließkante $Y_B$ der Abblaseöffnung Y hat die erste markante Stelle B des Kanalendes 60 erreicht, so dass die Abblaseöffnung Y vollständig den Kanal 51 freigibt, derart, dass Abgas von dem Kanal 51 über die Abblaseöffnung Y in den hier nicht näher dargestellten dritten Kanal 53 (siehe Fig. 1) strömen kann. In dieser Position der Ventileinrichtung 50 sind die beiden Fluten 5, 6 geschlossen und es wird das Abgas vollständig in den dritten Kanal 53 abgeblasen.

Durch die vorliegende Erfindung werden Konstruktionsvorgaben definiert zwischen Brennkraftmaschine, Turbolader und erreichbarer Bremsleistung mit dem Ziel möglichst geringer thermischer Belastung der Brennkraftmaschine 100 und des Abgasturboladers 20.

Dabei kommen dem Gesamthubvolumen $V_H$ der Brennkraftmaschine 100, dem Durchmesser $D_T$ des Turbinenrades 12 und dem freien Strömungsquerschnitt $A_D$ im Abgasweg zur Turbine 3 besondere Bedeutung zu. Der freie Strömungsquerschnitt $A_D$ setzt sich dabei zusammen aus dem festen kleinsten Strömungsquerschnitt $A_{D,klein}$ und dem maximalen variablen Öffnungsquerschnitt $dA_{Ab,max}$.

Der Zusammenhang, der erfindungsgemäß gegeben ist, und der zu einer Brennkraftmaschine mit Abgasturbolader führt, bei dem für den Bremsbetrieb hohe Bremsleistungen mit relativ geringen thermischen Belastungen verbunden sind, stellt sich wie folgt dar:

$$\mathrm{TBF_{Asym}} \;=\; \left(\mathrm{A_{D,klein}} \;+\; \mathrm{dA_{Ab,max}}\right) \cdot \frac{\mathrm{D_T}}{\mathrm{V_H}} \,,$$

wobei $TBF_{Asym}$ einen Turbolader-Brems-Faktor bildet, der kleiner 0,005 ist und der bevorzugt zwischen 0,001 und 0,003, insbesondere bei 0,002 liegt. Weist die Brennkraftmaschine 100 ein Gesamthubvolumen von größer zehn Liter auf, ist, um ein Überdrehen der Turboladerrotordrehzahl des Abgasturboladers 20 zu vermeiden, ein Abblasen zu empfehlen. Das Abblasen gilt ebenso für hohe Bremsleistungen, die einen Wert des Turbolader-Brems-Faktors $TBF_{Asym}$ der kleiner 0,003 ist, aufweisen.

Entsprechend der konstruktiven Ausführung der Turbine 3 wird der feste kleinste Strömungsquerschnitt $A_{D,klein}$ entweder vom kleinsten Ringdüsenquerschnitt $A_{D1}$ oder vom Halsquerschnitt $A_1$ vorgegeben. Ist der kleinste Ringdüsenquerschnitt $A_{D1}$ größer als der Halsquerschnitt $A_1$, so stellt der Halsquerschnitt $A_1$ den festen kleinsten Strömungsquerschnitt $A_{D,klein}$ dar. Ist der Halsquerschnitt $A_1$ größer als der kleinste Ringdüsenquerschnitt $A_{D1}$, so stellt der kleinste Ringdüsenquerschnitt $A_{D1}$ den festen kleinsten Strömungsquerschnitt $A_{D,klein}$ dar.

Da für das Umblasen die größere Flut 7 Anwendung findet, das heißt von der größeren Flut 7 Abgas in die kleinere Flut 6 umgeblasen wird, ist es physikalisch nicht sinnvoll den maximalen variablen Öffnungsquerschnitt $dA_{Ab,max}$ größer als den Ringdüsenquerschnitt $A_{D2}$ der größeren Flut 7 zu wählen. Eine Vergrößerung des maximalen variablen Öffnungsquerschnitts $dA_{Ab,max}$ würde sich nicht strömungsgünstiger auswirken.

Der bei maximaler Bremsleistung freigegebene Strömungsquerschnitt auf das Turbinenrad 12 umfasst, entsprechend den vorangegangenen Erläuterungen, den festen Strömungsquerschnitt $A_{D,klein}$ und den variablen Öffnungsquerschnitt $dA_{Ab,max}$. Ein Verhältnis des maximalen variablen Öffnungsquerschnitts $dA_{Ab,max}$ und des festen Strömungsquerschnitts $A_{D,klein}$, genannt Verhältniszahl $V_A$, ist bevorzugt größer 0,2. Die Verhältniszahl $V_A$ liegt insbesondere im Bereich zwischen 0,2 und 1, wobei diese Verhältniszahl $V_A$ umso größer zu wählen ist, je höher die Motorbremsleistung schon bei niedrigen Drehzahlen sein soll.

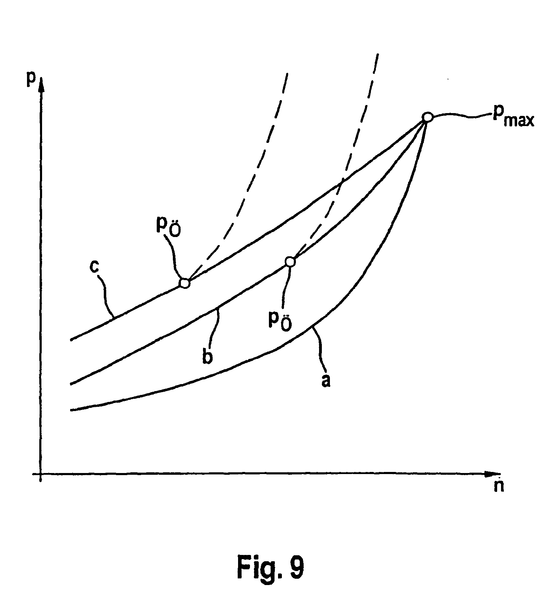

In Fig. 9 veranschaulicht dies in einem schematisierten Diagramm, in dem die Bremsleistung P über der Motordrehzahl n aufgetragen ist. Die Kurve a beschreibt die Verhältnisse in Bezug auf die Brennkraftmaschine 100 mit dem Abgasturbolader 20, bei denen über den gesamten Drehzahlbereich der Strömungsquerschnitt $A_D$ im Abgasweg zur Turbine 3 gleich groß gehalten ist, das heißt, der variable Öffnungsquerschnitt $dA_{Ab}$ ist nicht vorhanden. Der Kurvenzug b schneidet sich mit dem Kurvenzug a im Auslegungspunkt $P_{max}$ auf maximale Bremsleistung, liegt aber über dem Kurvenzug a und veranschaulicht eine Brennkraftmaschinenauslegung, bei der im niedrigen Motordrehzahlbereich schon eine höhere Bremsleistung angestrebt ist, und bei der somit, bezogen auf eine analoge Maschinenkonfiguration und gleichen Abgasmengen, im unteren Drehzahlbereich ein kleiner variabler Öffnungsquerschnitt $dA_{Ab}$, zusätzlich zum festen kleinsten Strömungsquerschnitt $A_{D,klein}$, im Abgasweg zur Turbine 3 gegeben sein muss. Dieser Auslegung entspricht eine Vergrößerung des variablen Öffnungsquerschnitts $dA_{Ab}$ für den oberen Drehzahlbereich, da ansonsten die maximale Bremsleistung bei einem niedrigeren Motordrehzahlniveau erreicht würde. Das heißt, dass der variable Öffnungsquerschnitt $dA_{Ab}$ mit abnehmender Drehzahl abnimmt. Der Beginn der Öffnung der Ventileinrichtung 50 ist bei $P_{\ddot{O}}$ angedeutet; ohne Zuschalten des variablen Öffnungsquerschnitts $dA_{Ab}$ ergäbe sich von $P_{\ddot{O}}$ ausgehend, der strichlierte, steilere Kurvenzug.

Der Kurvenzug c stellt eine weitere Variante mit noch höherer Bremsleistung im unteren Drehzahlbereich dar und bei gleicher Grundauslegung der Maschine muss der variable Öffnungsquerschnitt $dA_{Ab}$ für den oberen Drehzahlbereich größer sein als im Falle b, wenn die maximale Bremsleistung $P_{max}$ bei der gleichen Motordrehzahl erreicht werden soll. $P_{\ddot{O}}$ ist hier analog zum Kurvenzug b, der Zuschaltpunkt des variablen Öffnungsquerschnitts $dA_{Ab}$.

Eine Zuschaltung des variablen Öffnungsquerschnitts $dA_{Ab}$ erfolgt also mit zunehmendem variablen Anteil am gesamten freien Strömungsquerschnitt $A_D$ beziehungsweise höher liegender Bremsleistung im unteren Drehzahlbereich bevorzugt jeweils bei niedrigen Drehzahlen, um eine gleichmäßige Steigerung der Bremsleistung über der Motordrehzahl zu gewährleisten.

In Bezug auf die Brennkraftmaschine 100 mit dem Abgasturbolader 20 wird die maximale Bremsleistung zweckmäßigerweise in einem Motordrehzahlbereich erreicht, der oberhalb des Bereiches der Nenndrehzahl (der Drehzahl bei maximaler Leistung) der Brennkraftmaschine 100 liegt. Liegt die Nenndrehzahl bei 1800 Umdrehungen, so kann die Motordrehzahl bei maximaler Bremsleistung beispielsweise im Bereich von 2300 Umdrehungen liegen, wobei dies eine bevorzugte Ausführung darstellt. Der obere Drehzahlbereich, in dem ein zusätzlicher, variabler, mit der Drehzahl wachsender Abströmquerschnitt freigegeben ist, beginnt zweckmäßigerweise etwa bei 2/3 bis 3/4 der bei maximaler Bremsleistung gegebenen Drehzahl, wobei die Größe des variablen Öffnungsquerschnitts $dA_{Ab}$ bevorzugt drehzahlabhängig bis zum Erreichen der maximalen Bremsleistung anwächst, die den Bezugspunkt für die vorstehend erläuterte Auslegung des Systems auf maximaler Bremsleistung bei möglichst geringer thermischer Belastung bildet.

## Patentansprüche

1. Brennkraftmaschine mit einem Abgasturbolader, die mit mindestens einem volumenveränderlichen Brennraum versehen ist und der Brennraum ein Gesamthubvolumen ($V_H$) aufweist, das durch die Differenz eines minimalen und eines maximalen Brennraumvolumen bestimmbar ist, wobei der Abgasturbolader (20) eine im Abgastrakt (4) der Brennkraftmaschine (1) angeordnete Turbine (3), die ein Turbinenrad (12) mit einem Durchmesser ($D_T$) und mindestens zwei Fluten (6, 7) und einem Halsquerschnitt ($A_1$), in den die Fluten (6, 7) münden, aufweist, wobei wenigstens zwei Ringdüsenquerschnitte ($A_{D1}$, $A_{D2}$) der mindestens zwei Fluten (6, 7) unterschiedlich groß sind, und dem Turbinenrad (12) Abgas über einen Strömungsquerschnitt ($A_1$) zuführbar ist, wobei im Abgasweg zur Turbine (3) eine Ventileinrichtung (50) mit einem zwischen einem minimalen Öffnungsquerschnitt ($dA_{Ab,min}$) und einem maximalen Öffnungsquerschnitt ($dA_{Ab,max}$) variablen Öffnungsquerschnitt ($dA_{Ab}$) vorgesehen ist, und mit Hilfe der Ventileinrichtung (50) Abgas von einer Flut (6, 7) in die andere Flut (7, 6) umblasbar oder Abgas am Turbinenrad (12) vorbei abblasbar ist,
**dadurch gekennzeichnet,**

**dass** bezogen auf einen Motorbremsbetrieb bei maximaler Bremsleistung der Brennkraftmaschine (100)

- der Durchmesser ($D_T$) des Turbinenrades (12),
- das Hubvolumen ($V_H$) der Brennkraftmaschine (100),
- ein kleinster Strömungsquerschnitt ($A_{D,klein}$) auf das Turbinenrad (12),
- der maximale Öffnungsquerschnitt ($dA_{Ab,max}$) einer Öffnung (X) der Ventileinrichtung (50) in folgender Beziehung zueinander stehen:

$$\text{TBF}_{\text{Asym}} = \left( A_{D,klein} + dA_{Ab,max} \right) \cdot \frac{D_T}{V_H} ,$$

wobei $\text{TBF}_{\text{Asym}}$ als Turbolader-Brems-Faktor kleiner 0,005 ist, und dass für den bei maximaler Bremsleistung vorgegebenen kleinsten Strömungsquerschnitt gilt:

$$A_{D,klein} = A_{D1} ,$$

für den Fall dass der Halsquerschnitt ($A_1$) größer ist als der kleinste Ringdüsenquerschnitt ($A_{D1}$) oder
**dass** für den bei maximaler Bremsleistung vorgegebenen kleinsten Strömungsquerschnitt gilt:

$$A_{D,klein} = A_1 ,$$

für den Fall dass der Halsquerschnitt ($A_1$) kleiner ist als der kleinste Ringdüsenquerschnitt ($A_{D1}$).

2. Brennkraftmaschine nach Anspruch 1,
   **dadurch gekennzeichnet,**
   **dass** der Turbolader-Bremsfaktor $\text{TBF}_{\text{Asym}}$ zwischen 0,001 und 0,003 liegt.

3. Brennkraftmaschine nach Anspruch 2,
   **dadurch gekennzeichnet,**
   **dass** der Turbolader-Bremsfaktor $\text{TBF}_{\text{Asym}}$ bei 0,002 liegt.

4. Brennkraftmaschine nach einem der Ansprüche 1 bis 3,
   **dadurch gekennzeichnet,**
   **dass** für das Verhältnis ($V_A$) des maximalen variablen Öffnungsquerschnitts ($dA_{Ab,max}$) zum kleinsten Strömungsquerschnitt ($A_{D,klein}$ ) bei maximaler Bremsleistung gilt:

$$V_A = \frac{dA_{Ab,max}}{A_{D,klein}} > 0,2 .$$

5. Brennkraftmaschine nach einem der Ansprüche 1 bis 4,
   **dadurch gekennzeichnet,**
   **dass** der Wert des Öffnungsquerschnitts ($dA_{Ab,max}$) der Umblaseöffnung (X) der Ventileinrichtung (50) bei maximaler Bremsleistung der obere Grenzwert ist, den der Öffnungsquerschnitt ($dA_{Ab}$) der Umblaseöffnung (X) der Ventileinrichtung (50) annehmen kann.

6. Brennkraftmaschine nach einem der Ansprüche 1 bis 5,
   **dadurch gekennzeichnet,**
   **dass** der Wert des maximalen Öffnungsquerschnitts ($dA_{Ab,max}$) der Umblaseöffnung (X) der Ventileinrichtung (50) höchstens den gleichen Wert eines größten Ringdüsenquerschnitts aufweist.

**7.** Brennkraftmaschine nach einem der Ansprüche 1 bis 6,
**dadurch gekennzeichnet,**
**dass** der Öffnungsquerschnitt (dA$_{Ab}$) der Umblaseöffnung (X) der Ventileinrichtung (50) drehzahlabhängig veränderbar ist.

**8.** Brennkraftmaschine nach Anspruch 7,
**dadurch gekennzeichnet,**
**dass** der Öffnungsquerschnitt (dA$_{Ab}$) der Umblaseöffnung (X) der Ventileinrichtung (50) mit abnehmender Drehzahl abnimmt.

**9.** Brennkraftmaschine nach einem der Ansprüche 1 bis 8,
**dadurch gekennzeichnet,**
**dass** der Bereich des Öffnungsquerschnitts (dA$_{Ab}$) einem oberen Bereich eines Drehzahlbandes zugeordnet ist, das mindestens bis zu der Drehzahl bei maximaler Bremsleistung reicht.

**10.** Brennkraftmaschine nach Anspruch 9,
**dadurch gekennzeichnet,**
**dass** die maximale Bremsleistung bei einer Drehzahl liegt, die größer ist als die Nenndrehzahl der Brennkraftmaschine (100).

**11.** Brennkraftmaschine nach Anspruch 10,
**dadurch gekennzeichnet,**
**dass** der Drehzahlbereich, in dem der Öffnungsquerschnitt (dA$_{Ab}$) der Umblaseöffnung (X) der Ventileinrichtung (50) freigegeben ist, bei etwa 2/3 bis 3/4 der bei maximaler Bremsleistung gegebenen Drehzahl beginnt.

**12.** Brennkraftmaschine nach Anspruch 11,
**dadurch gekennzeichnet,**
**dass** die maximale Bremsleistung bei einer Drehzahl liegt, die etwa 1/4 bis 1/3 größer ist als die Nenndrehzahl der Brennkraftmaschine (100).

**13.** Brennkraftmaschine nach Anspruch 1,
**dadurch gekennzeichnet,**
**dass** ein das Größenverhältnis der Fluten (6, 7) der Turbine (3) kennzeichnender Asymmetriefaktor F$_{Asym}$ in Abhängigkeit des Hubvolumen (V$_H$) der Brennkraftmaschine (100) der Beziehung

$$F_{Asym} \leq \left( \frac{1}{V_H} \right)^{0,15}$$

folgt, wobei der Asymmetriefaktor F$_{Asym}$ gemäß der Beziehung

$$F_{Asym} = \frac{\phi_{31,S}}{\phi_{32,S}}$$

definiert ist und mit $\phi_{31,S}$ und $\phi_{32,S}$ Turbinendurchsatzparameter im Bereich der Stopfgrenze (S) der Turbine (3) bezeichnet sind, die aus dem Zusammenhang

$$\phi_{31,S} = \dot{m}_{31,S} \sqrt{T_{31,S}} \cdot \frac{1}{p_{31,S}}$$

$$\phi_{32,S} = \dot{m}_{32,S}\sqrt{T_{32,S}} \cdot \frac{1}{p_{32,S}}$$

ermittelbar sind, und mit $\dot{m}_{31,S}$ und $\dot{m}_{32,S}$ der Abgasmassenstrom durch die erste beziehungsweise zweite Flut (6, 7) im Bereich der Stopfgrenze (S) der Turbine (3), $T_{31,S}$, $T_{32,S}$ die Abgastemperatur in der ersten beziehungsweise zweiten Flut (6, 7) im Bereich der Stopfgrenze S der Turbine (3) und $p_{31,S}$, $p_{32,S}$ die Abgasdrücke in der ersten beziehungsweise zweiten Flut (6, 7) im Bereich der Stopfgrenze (S) der Turbine (3) bezeichnet ist.

**14.** Brennkraftmaschine nach Anspruch 1,
**dadurch gekennzeichnet,**
**dass** die Ventileinrichtung (50) als Drehschieber ausgebildet ist.

**15.** Brennkraftmaschine nach Anspruch 14,
**dadurch gekennzeichnet,**
**dass** der Drehschieber eine Umblaseöffnung (X) und eine Abblaseöffnung (Y) aufweist.

**16.** Brennkraftmaschine nach Anspruch 15,
**dadurch gekennzeichnet,**
**dass** die Abblaseöffnung (Y) als flacher Schlitz am Schieber (48) ausgebildet ist.

**17.** Brennkraftmaschine nach Anspruch 14,
**dadurch gekennzeichnet,**
**dass** bei Turbolader-Bremsfaktoren $TBF_{Asym}$ die kleiner 0,003 sind, die Ventileinrichtung (50) sich in einer Abblasestellung befindet.

**18.** Brennkraftmaschine nach Anspruch 14,
**dadurch gekennzeichnet,**
**dass** bei Turbolader-Bremsfaktoren $TBF_{Asym}$ die größer oder gleich 0,003 sind, die Ventileinrichtung (50) sich in einer Umblasestellung befindet.

**Claims**

**1.** Internal combustion engine with an exhaust gas turbocharger, which is provided with at least one combustion chamber whose volume can be varied, the combustion chamber having a total stroke volume ($V_H$) which can be determined by the difference between a minimum and a maximum combustion chamber volume, such that the exhaust gas turbocharger (20) comprises a turbine (3) arranged in the exhaust line (4) of the internal combustion engine (1), which has a turbine wheel (12) of diameter ($D_T$) and at least two flow channels (6, 7) and a throat cross-section ($A_1$) intro which the flow channels (6, 7) open, at least two angular nozzle cross-sections ($A_{p1}$, $A_{p2}$) of the said at least two flow channels (6, 7) being of different size, and exhaust gas can be passed to the turbine wheel (12) through a flow cross-section ($A_1$), a valve devise (50) with an aperture cross-section ($dA_{Ab}$) that can be varied between a minimum aperture cross-section ($d_{Ab, min}$) and a maximum aperture cross-section ($d_{Ab, max}$) being provided in the exhaust gas path to the turbine (3), such that with the help of the said valve device (50) exhaust gas can be blown across from one flow channel (6, 7) intro the other flow charnel (7, 6) or exhaust gas can be blown past the turbine wheel (12),
**characterised in that**
in reflation to engine breaking operation with the maximum breaking power of the internal combustion engine (100),

- the diameter ($D_T$) of the turbine wheel (12),
- the stroke volume ($V_H$) of the internal combustion engine (100),
- a minium flow cross-section ($A_{p, klein}$) onto the turbine wheel (12),
- and a maximum aperture cross-section ($dA_{Ab, maximum}$) of an opening (X) of the valve devise (50) are related as follows:

$$TBF_{Asym} = (AD, klein + dA_{Ab, max}) \cdot (D_T / V_M)$$

in which $TBF_{Asum}$, as the turbocharger breaking factor, is smaller than 0.005,and the smallest flow cross-section specified for maximum braking power is given by

$$A_{p, klein} = A_{p1}$$

for the case when the throat cross-section ($A_1$) is larger than the smallest annular nozzle cross-section ($A_{p1}$), or when the smallest flow cross-suction specified at maximum braking power is given by

$$A_{p, klein} = A_1$$

for the case when the throat cross-section 9$A_1$) is smaller than the smallest annular nozzle cross-section ($A_{p1}$).

2. Internal combustion engine according to Claim 1,
   **characterised in that**
   the turbocharger braking factor $TBF_{Asym}$ is between 0.01 and 0.003.

3. Internal combustion engine according to Claim 2,
   **characterised in that**
   the turbocharger braking factor $TBF_{Aysm}$ is approximately 0.002.

4. Internal combustion engine according to any of Claims 1 to 3,
   **characterised in that**
   for the radio ($V_A$) of the maximum variable aperture cross-section ($dA_{Ab, max}$) to the smallest flow cross-section ($A_{p, klein}$) at maximum breaking power, the following relationship applies:

$$V_A = (dA_{Ab, max} / A_{p, klein}) > 0.2$$

5. Internal combustion engine according to any of Claims 1 to 4,
   **characterised in that**
   the value of the aperture cross-section ($dA_{Ab, max}$) of the blow-across opening (X) of the valve device (50) at maximum braking power is the upper limit value that can be adopted by the aperture cross-section ($dA_{Ab}$) of the blow-across opening (X) of the valve device (50).

6. Internal combustion engine according to any of Claims 1 to 5,
   **characterised in that**
   the value of the maximum aperture cross-section ($dA_{Ab, max}$) of the blow-across opening (X) of the valve device (50) is at most equal to the value of a maximum annular nozzle cross-section.

7. Internal combustion engine according to any of Claims 1 to 6,
   **characterised in that**
   the aperture cross-section ($dA_{Ab}$) of the blow-across opening (X) of the valve device (50) can be varied as a function of the rotation speed.

8. Internal combustion engine according to Claim 7,
   **characterised in that**
   the aperture cross-section ($dA_{Ab}$) of the blow-across opening (X) of the valve device (50) decreases with decreasing speed.

9. Internal combustion engine according to any of Claims 1 to 8,
   **characterised in that**
   the range of the aperture cross-section ($dA_{Ab}$) is associated with an upper range of a rotation speed band that extends at least up to the speed at maximum braking power.

10. Internal combustion engine according to Claim 9,
    **characterised in that**
    the maximum braking power exists at a speed higher than the rated rotation speed of the internal combustion engine (100).

11. Internal combustion engine according to Claim 10,
    **characterised in that**
    the speed range in which the aperture cross-section ($dA_{Ab}$) of the blow-across opening (X) of the valve device (50) is opened, begins at approximately 2/3 to 3/4 of the speed at maximum braking power.

12. Internal combustion engine according to Claim 11,
    **characterised in that**
    the maximum breaking power exists at a speed approximately 1/4 to 1/3 higher than the rated speed of the interval combustion engine.

13. Internal combustion engine according to Claim 1,
    **characterised in that**
    an asymmetry factor $F_{Asym}$ that characterise the size ratio of the flow charnels (6, 7) of the turbine (3) as a function of the stroke volume ($V_H$) of the internal combustion engine (100) follows the relationship:

$$F_{Asym} \leq (1 / V_H)^{0.15}$$

in which the asymmetry factor $F_{Asym}$ is defined by the relationship:

$$F_{Asym} = (\phi_{31.S} / \phi_{32.S})$$

and in which $\phi_{31.S}$ and $\phi_{32.S}$ denote turbine throughput parameters in the area of the stop limit (S) of the turbine (3), which can be determined from the relationships:

$$\phi_{31.S} = \dot{m}_{31.S}\sqrt{T_{31.S}} \cdot (1 / p_{31.S})$$

$$\phi_{32.S} = \dot{m}_{32.S}\sqrt{T_{32.S}} \cdot (1 / p_{32.S})$$

in which $\dot{m}_{31.S}$ and $\dot{m}_{32.S}$ denote the respective exhaust gas flows through the first and the second flow channel (6, 7) in the area of the stop limit (S) of the turbine (3), $T_{31.S}$ and $T_{31.S}$ are the exhaust gas temperatures in the area of the stop limit (S) of the turbine (3), and $p_{31.S}$ and $p_{32.S}$ are the exhaust gas pressures in the area of the stop limit (S) of the turbine (3).

14. Internal combustion engine according to Claim 1,
    **characterised in that**
    the valve device (50) is in the form of a rosary slide valve.

15. Internal combustion engine according to Claim 14,
    **characterised in that**
    The rotary slide valve comprises a blow-across opening (X) and a blow-off opening (Y).

16. Internal combustion engine according to Claim 15,
    **characterised in that**
    blow-off opening (Y) is made as a flat slit in the slide (48).

**17.** Internal combustion engine according to Claim 14,
**characterised in that**
in the case of turbocharger braking factors $TBF_{Aysm}$ smaller than 0.003, the valve device (50) is in a blow-out position.

**18.** Internal combustion engine according to Claim 14,
**characterised in that**
in the case of turbocharger braking factors $TBF_{Asym}$ larger than or equal to 0.003, the valve device (50) is in a blow-across position.

**Revendications**

**1.** Moteur à combustion interne avec un turbocompresseur à gaz d'échappement qui est doté d'au moines urne chambre à combustion à volume variable, ladite chambre à combustion présente un volume engendré total ($V_H$), qui peut être déterminé par la différence entre un volume minimal et un volume maximal de la chambre de combustion, le turbocompresseur à gaz d'échappement (20) présente une turbine (3) disposée dans la ligné (4) d'échappement du moteur à combustion interne (1), ladite turbine présenté une roue de turbine (12) d'un diamètre ($D_T$) et au moins deux flux (6, 7) et une section transversale du col ($A_1$) dans lesquels les flux (6, 7) débauchent, au moins deux sections de tuyères annulaires ($A_{D1}$, $A_{D2}$) d'au moines deux flux (6, 7) étant de dimension différente, et une section de passage ($A_1$) étant prévue pour alimenter la roue de turbine (12) en gaz d'échappement, dans le trajet des gaz d'échappement vers la turbine (3) est prévu un ensemble soupape (50) dont une rection d'ouverture varie entre une section d'ouverture minimale ($dA_{Ab, min}$) et une section d'ouverture maximale ($dA_{Ab, max}$), et l'ensemble soupape (50) permet de dévier le gaz d'échappement d'un flux (6, 7) à l'autre (6, 7) ou d'évacuer le gaz d'échappement de la roue de turbine (12), **caractérisée en ce que** lorsque le moteur à combustion interné (100) fournit une force de freinage maximale perdant le freinage

 - le diamètre ($D_T$) de la roue de turbine (12).
 - le volume engendré ($V_H$) du moteur à combustion interne (100),
 - la plus petite rection de passage ($A_{D, klein}$) sur la roue de turbine (12),
 - la rection d'ouverture maximale ($dA_{Ab, max}$) d'une ouverture (X) de l'ensemble soupape (50) sont décrits par l'équation suivante :

$$TBF_{Asym} = \left( A_{D,klein} + dA_{Ab,max} \right) \cdot \frac{D_T}{V_H} \,,$$

le facteur $TBF_{Asym}$ de freinage de turbocompresseur étant inférieur à 0,005 et pour la plus petite section de passage prédéfinie lorsque la force de freinage est à son maximum, s'applique l'équation suivante :

$$A_{D, klein} = A_{D1}$$

Si la section transversale de col ($A_1$) est supérieure à la plus petite section de la tuyère annulaire ($A_{D1}$) ou que pour la plus petite rection de passage prédéfinie lorsque la force de freinage est à son maximum, s'applique alors l'équation :

$$A_{D, klein} = A_1 \,,$$

Si la section transversale de col ($A_1$) est inférieure à la plus petite section de la tuyère annulaire ($A_{D1}$).

**2.** Moteur à combustion interne selon la revendication 1, **caractérisé en ce que** le facteur de freinage $TBF_{Asym}$ de turbocompresseur se situe entre 0,001 et 0, 003.

**3.** Moteur à combustion interne selon la revendication 2, **caractérisé en ce que** le facteur de freinage de turbocompresseur est de 0,002.

**4.** Moteur à combustion interne selon l'une quelconque des revendications 1 à 3, **caractérisé en ce que** pour le rapport ($V_A$) de la section d'ouverture maximale variable ($dA_{Ab, max}$) à la plus petite section de passage ($A_{d, klein}$) lorsque la force de freinage est à son maximum s'applique l'équation suivante :

$$V_A = \frac{dA_{Ab, max}}{A_{D, klein}} > 0.2 \quad .$$

**5.** Moteur à combustion interné selon l'une quelconque des revendications 1 à 4, **caractérisé en ce que** lorsque la force de freinage est à son maximum, la valeur de la section d'ouverture ($dA_{Ab, max}$) de l'ouverture de dérivation (X) de l'ensemble soupape (50) est la valeur limité supérieure que peut accepter la section d'ouverture ($dA_{Ab}$) de l'ouverture de dérivation (X) de l'ensemble soupape (50).

**6.** Moteur à combustion interné selon l'une quelconque des revendications 1 à 5, **caractérisé en ce que** la valeur de la rection d'ouverture maximale ($dS_{Ab, max}$) de l'ouverture de dérivation (X) de l'ensemble soupape (50) présente tout au plus la même valeur que celle de la plus grande rection de tuyère annulaire.

**7.** Moteur à combustion interne selon l'une quelconque des revendications 1 à 6, **caractérisé en ce que** pour la rection d'ouverture ($dA_{Ab}$) de l'ouverture de dérivation (X) de l'ensemble soupape (50) peut être modifiée en ponction de la vitesse de votation.

**8.** Moteur à combustion interna selon la revendication 7, **caractérise en ce que** la rection d'ouverture ($dA_{Ab}$) de l'ouverture de dérivation (X) de l'ensemble soupape (50) diminue avec unie vitesse de votation décroissante,

**9.** Moteur à combustion interne selon l'une quelconque des revendications 1 à 8, **caractérisé en ce que** la plage de rection d'ouverture ($dA_{Ab}$) est associée à une zone supérieure d'une plage de vitesses de votation qui va au moins jusqu'à la vitesse de rotation lorsque la force de freinage est à son maximum.

**10.** Moteur à combustion interna selon la revendication 9, **caractérisé en ce que** la force de freinage maximale se situe à une vitesse de notation qui est supérieure à la vitesse de rotation nominale du moteur à combustion interne.

**11.** Moteur à combustion interne selon la revendication 10, **caractérisé en ce que** la plage de vitesses de votation, dans laquelle la rection d'ouverture ($dA_{Ab}$) de l'ouverture de dérivation (X) de l'ensemble soupape (50) est libérée, commence à environ $^2/_3$ à ¾ de la vitesse de rotation donnée lorsque la force de freinage est à son maximum.

**12.** Moteur à combustion interne selon la revendication 11, **caractérisé en ce que** la force de freinage maximale se situe à une vitesse de rotation qui est supérieure d'environ ¼ à ⅓ à la vitesse de notation nominale du moteur à combustion interne (100).

**13.** Moteur à combustion interné selon la revendication 1, **caractérisé en ce qu'**un facteur d'asymétrie $F_{Asym}$ caractérisant la proportion des flux (6, 7) de la turbine (3) en fonction du volume généré ($V_H$) du moteur à combustion interne suit l'équation :

$$F_{Asym} \leq \left(\frac{1}{V_H}\right)^{0.15}$$

le facteur d'asymétrie $F_{Asym}$ étant défini selon l'équation suivante :

$$F_{Asym} = \frac{\phi_{31, S}}{\phi_{32, S}}$$

et $\phi_{31, S}$ et $\phi_{32, S}$ désignent les paramètres de débit de la turbine dans la zone de la ligne de blocage (S) de la turbine (3) qui peuvent être déterminés à partir de l'équation suivante

$$\phi_{31,S} = \dot{m}_{31,S}\sqrt{T_{31,S}} \cdot \frac{1}{p_{31,S}}$$

$$\phi_{32,S} = \dot{m}_{32,S}\sqrt{T_{32,S}} \cdot \frac{1}{p_{32,S}}$$

et $m_{31, S}$ et $m_{32, S}$ désignent le débit massique de gaz d'échappement par le premier ou le second flux (6, 7) dans la zone de la ligne de blocage (S) de la turbine (3), $T_{31, S}$, $T_{32, S}$ désignent la température du gaz d'échappement dans le premier ou le second flux (6, 7) dans la zone de la ligne de blocage (S) de la turbine (3) et $P_{31, S}$ et $P_{32, S}$ correspondent aux pressions du gaz d'échappement dans le premier ou le second flux (6, 7) dans la zone de la ligne de blocage (S) de la turbine (3).

**14.** Moteur à combustion interne selon la revendication 1, **caractérisé en ce que** l'ensemble soupape (50) est configuré en tant que tiroir rotatif.

**15.** Moteur à combustion interne selon la revendication 14, **caractérisé en ce que** le tiroir rotatif présente une ouverture de dérivation (X) et une ouverture d'évacuation (Y).

**16.** Moteur à combustion interne selon la revendication 15 **caractérisé en ce que** l'ouverture d'évacuation (Y) est configurée en tant que rainure plate sur le tiroir (48).

**17.** Moteur à combustion interne selon la revendication 14, **caractérisé en ce que** pour des facteurs de freinage $TBF_{Asym}$ de turbocompresseur qui sont inférieurs à 0,003, l'ensemble soupape (50) se trouve dans une position d'évacuation.

**18.** Moteur à combustion interne selon la revendication 14, **caractérisé en ce que** pour des facteurs de freinage de turbocompresseur qui sont supérieurs ou égaux à 0,003, l'ensemble soupape (50) se trouve dans une position de dérivation.

**Fig. 1**

**Fig. 2**

Fig. 4

Fig. 3

Fig. 5

Fig. 6

EP 1 766 209 B1

Fig. 7

Fig. 8

21

Fig. 9

**IN DER BESCHREIBUNG AUFGEFÜHRTE DOKUMENTE**

**In der Beschreibung aufgeführte Patentdokumente**

- DE 10152804 A1